# FASCICULE DE BREVET EUROPEEN

(11) **EP 2 079 630 B1**
(45) Date de publication et mention de la délivrance du brevet: **24.03.2010**
(21) Numéro de dépôt: 07858617.9
(22) Date de dépôt: 17.10.2007
(51) Int. Cl.: B62K 23/06

(54) **COMMANDE A GACHETTE DE POUCE**
STEUERVORRICHTUNG MIT DAUMEN-TRIGGER
CONTROL DEVICE WITH THUMB TRIGGER

(30) Priorité: 19.10.2006 FR 0609161
(43) Date de publication de la demande: 22.07.2009
(73) Titulaire: VELLUTINI, Frédéric, 20090 Ajaccio (FR)
(72) Inventeur: VELLUTINI, Frédéric, 20090 Ajaccio (FR)
(74) Mandataire: Dossmann, Gérard
(86) Numéro de dépôt international: PCT/FR2007/052194
(87) Numéro de publication internationale: WO 2008/047056

(56) Documents cités:
- EP-A- 1 312 541
- WO-A-00/29280
- WO-A-95/07836
- WO-A-2006/091197
- FR-A- 339 568
- FR-A- 835 778
- FR-A- 2 654 698
- US-A1- 2003 213 331

## Description

La présente invention concerne le domaine des dispositifs de commande manuelle d'une machine, couplés à une poignée permettant d'empoigner la machine. En particulier, le dispositif permet de contrôler de façon sensitive et non fatigante une commande d'un des systèmes asservis de cette machine.

Un effort d'empoignement important de la main sur la poignée d'une machine est généralement nécessaire pour permettre un maintien correct de la machine et son utilisation en toute sécurité. Il est difficile de concilier un empoignement vigoureux d'une poignée d'une machine et d'exercer en même temps une commande couplée sur cette poignée.

Certaines machines présentent une poignée pour tenir la machine. C'est le cas des outillages portatifs comme les perceuses, les débroussailleuses, les marteaux piqueurs ou les tronçonneuses. Dans d'autres machines, comme des motos, la ou les poignées servent à maintenir la machine. Il existe enfin d'autres machines telles que des quads, des jet skis ou des motosneige, dont les poignées permettent à l'utilisateur pilote de se maintenir lui-même sur la machine. Tous ces types de machines nécessitent un empoignement vigoureux d'une ou de plusieurs poignées.

Par ailleurs, certains systèmes asservis peuvent être commandés ponctuellement au moment d'un changement de consigne. C'est le cas par exemple des commandes de boîtes de vitesses. La main de l'utilisateur n'est alors sollicitée que ponctuellement, pour commander la machine. L'empoignement de la machine peut supporter d'être légèrement affaibli durant l'opération ponctuelle de commande.

D'autres systèmes asservis en revanche, nécessitent d'être commandés de manière continue ou quasi permanente tels que des commandes d'un carburateur, ou de la vitesse d'un moteur électrique. Un problème particulier se pose pour les commandes manuelles devant être actionnées durant un temps long, depuis une poignée empoignée fermement. Il est nécessaire de réduire un risque de crampe dans les muscles de la main sollicitée pour l'actionnement de la commande.

Le problème de compatibilité avec un empoignement vigoureux se pose également pour la commande de systèmes nécessitant un dosage fin de la consigne. Lorsqu'une consigne nouvelle doit être adaptée à la réaction de la machine, il y a lieu que la main puisse doser l'effort exercé et/ou le déplacement d'une commande.

Le problème de compatibilité avec un empoignement ferme se pose également pour la commande d'un système nécessitant une réaction rapide de l'utilisateur de la machine.

Le problème de la compatibilité avec un empoignement ferme se pose dès lors que l'action de la main est requise durant un temps prolongé, même si la commande du système présente également des périodes d'inactivité. De même, des systèmes d'asservissement comprenant des moyens d'échantillonnage de la consigne posent également un problème d'empoignement efficace, puisque la main continue d'agir entre deux échantillons de cette consigne.

Dans le domaine des dispositifs de commande manuelle couplés à une poignée permettant d'empoigner fermement une machine, il y a notamment les poignées équipant l'extrémité d'un guidon. Les deux poignées nécessitent un empoignement important.

La commande d'un système asservi sur une de ces poignées entraîne généralement un défaut d'empoignement car elle nécessite soit l'usage d'un ou plusieurs doigts soit celui du poignet, entraînant de ce fait un déséquilibre avec la poignée opposée. Ce déséquilibre peut s'avérer être relativement dangereux car il affecte la préhension du guidon et donc la capacité à se maintenir et à diriger la machine. Le système de commande à la poignée doit aussi permettre une commande précise qui ne soit pas fatigante avec le temps.

Il existe plusieurs type de commandes couplées à des poignées qui nécessitent, ou une rotation du poignet, ou de détacher de la poignée un ou plusieurs doigts afin d'actionner la commande. Les commandes les plus classiques montées sur poignée pilotent généralement des systèmes asservis comme des commandes de gaz, de frein, d'embrayage ou de rapport de boite de vitesse.

Les commandes de frein montées sur véhicules, par exemple, utilisent le plus souvent un levier articulé positionné devant la poignée. Ce levier est généralement actionné par un ou plusieurs des doigts (index, majeur, annulaire, auriculaire) qui en se refermant effectuent une pression sur le levier, créant via un système hydraulique une pression qui pilote le système de freinage.

Pour les motos, on trouve généralement un dispositif de poignée à commande qui permet de piloter la commande des gaz. Ce système est constitué par une poignée rotative enroulant un câble qui pilote un volet des gaz. Pour effectuer cette commande en rotation on peut laisser tous les doigts serrés sur la poignée permettant une préhension correcte de celle-ci mais on doit plier en permanence, et parfois de façon conséquente, le poignet afin de générer la commande. Généralement la position de repos de la commande correspond à la position naturelle du poignet. On génère la commande en effectuant une flexion du poignet jusqu'à la limite physiologique du poignet. Cette flexion continue du poignet entraîne une gêne évidente et génère un déséquilibre avec le bras opposé qui lui maintient son poignet dans une position naturelle et non fatigante. De plus, la flexion du poignet affecte physiologiquement la capacité de flexion extension des doigts et donc la préhension. Donc, une augmentation de la flexion du poignet, générant une augmentation de la commande, entraîne non seulement un gêne pour le pilotage du véhicule mais aussi une diminution de la capacité de préhension et à fortiori d'empoignement. En résumé plus on accélère et on va vite, moins la position du poignet et la préhension sont bonnes. De plus lors des accélérations du véhicule, en cherchant a se maintenir plus fermement, on a une tendance naturelle a tourner encore plus la poignée et donc à augmenter la commande d'accélération de la machine ce qui est relativement dangereux.

Sur les quads on trouve généralement, comme type de commandes couplée à une poignée, un système de gâchette rotative actionnée par une pression du pouce. Cette gâchette rotative est généralement fixée sur le guidon en arrière de la poignée. Elle se déplace selon un plan horizontal passant par le pouce et positionné légèrement sous la poignée. Pour l'actionner il faut retirer le pouce de la poignée, le reculer vers la gâchette et le mettre en appui sur celle-ci. On obtient ainsi une bonne préhension de la commande avec le pouce et la possibilité de bien contrôler la commande du fait de l'utilisation du pouce. Néanmoins ce système comporte deux inconvénients majeurs. Premièrement cette commande oblige un mouvement et une extension latérale du pouce qui s'avère relativement pénible à la longue. Ce mouvement latéral, d'avant en arrière du pouce, ne permet plus à sa phalange de rester en appui permanent avec la poignée et donc de participer à la préhension de la poignée. Si la phalange reste en appui avec la poignée on ne peut plus effectuer la commande car le doigt n'a plus assez de degrés de liberté. Lors de la commande de la gâchette, la préhension est laissée aux doigts restants (index, majeur, annulaire, auriculaire) qui augmentent leur effort de serrage pour maintenir un empoignement correct, malgré la perte de ce doigt essentiel, entraînant une fatigue rapide de ces doigts voir des crampes. On obtient également, avec ce type de gâchette, un déséquilibre de préhension entre la poignée empoignée par tous les doigts dont le pouce et celle empoignée par tous les doigts sauf le pouce, entraînant un déséquilibre du guidon. Ces déséquilibres de maintien et de direction sont les inconvénients majeurs d'un tel système.

Sur les jet-skis la commande de gaz est généralement réalisée avec un petit levier appelé également gâchette articulée devant la poignée et actionnée par une traction de l'index. On peut alors tenir fermement la poignée avec le pouce dessous, permettant une meilleure préhension que la gâchette mais on perd l'usage de l'index occupé à gérer la commande et qui ne participe plus a la préhension de la poignée. Cette perte de l'index oblige a augmenter l'effort sur les autres doigts (majeur, annulaire, auriculaire) afin de compenser le déséquilibre d'effort avec l'autre poignée qui elle dispose de tous ces doigts pour la préhension. De plus l'index n'étant pas le doigt le plus robuste pour actionner une commande qui parfois s'avère dure, on obtient donc souvent une fatigue prématurée des muscles de l'index voir des crampes. L'auriculaire, du fait sa faible capacité musculaire, ne participe pas de façon significative à l'empoignement. Seuls le majeur et l'annulaire participent alors à l'empoignement de la partie supérieure de la poignée, ce qui est évidemment insuffisant. Ce dispositif de gâchette entraîne une augmentation générale de la fatigue des doigts, soit due à la gestion de la commande, soit due a l'augmentation de l'effort de préhension. On retrouve encore le problème de déséquilibre entre la poignée utilisant tous les doigts pour l'empoignement et celle qui n'en utilise qu'une partie, entraînant encore un problème de maintien du guidon et de maniement de la direction.

On trouve aussi des systèmes de commandes couplés à une poignée sur les outillages portatifs qui utilisent souvent des procédés de commande similaires à ceux énoncés plus haut. Sur certains outillages utilisant également un guidon, on retrouve les mêmes problèmes que ceux énoncés pour les véhicules. Sur les outillages, il existe des poignées qui intègrent une gâchette de type joystick ou arme à feu. Lorsque l'on empoigne l'outil on écrase la gâchette et effectue la commande. Si l'on désire ne plus effectuer de commande il faut relâcher l'empoignement en ouvrant un ou plusieurs doigts, entraînant une préhension moindre.

La demande de brevet WO 2006/091 197 décrit un levier de basculement pour bicyclette. Le dispositif décrit comporte un mécanisme de cliquet entre la poignée et le levier de basculement. Pour agir sur le levier, l'utilisateur doit ouvrir le pouce, cesser de serrer la poignée avec le pouce, et tirer le pouce vers le bas pour atteindre le levier. Après actionnement du levier, le serrage de la poignée est de nouveau possible lorsque le pouce a quitté le levier.

La demande EP 1 312 541 décrit un dispositif de changement de vitesses pour bicyclette avec les caractéristiques du préambule de la revendication indépendante. Là encore, le cycliste doit soulever le pouce et le décoller de la poignée pour atteindre le levier de vitesses. Un inconvénient commun aux leviers décrits dans les deux demandes de brevets précitées, est que l'actionnement de la commande s'accompagne d'un affaiblissement du serrage de la poignée. De plus, le type de levier est un système de commande ponctuel et ne permet pas de commander des systèmes à commande continue.

L'invention propose un dispositif manuel de commande comprenant une poignée d'empoignement d'une machine qui remédie à au moins un des inconvénients ci-dessus. Un but de l'invention est de permettre un bon empoignement de la poignée tout en permettant de commander un système asservi de la machine, et en particulier un système à commande continue.

Selon un mode de réalisation, le dispositif manuel de commande comprend une poignée destinée à être empoignée par une main avec un pouce. Le dispositif comprend une gâchette destinée à être soumise à une pression de la phalangine du pouce. La gâchette est disposée par rapport à la poignée de manière à pouvoir être soumise à une pression de la phalangine pendant que la phalange dudit pouce est en appui le long de la poignée. La caractéristique de position de la gâchette par rapport à la poignée est définie en considérant une main moyenne d'un utilisateur de la machine, également appelée main de référence.

Dans un tel dispositif, le fait que la phalange du pouce puisse atteindre une gâchette sans obliger la phalange du pouce à se décoller de la poignée permet d'assurer un empoignement ferme de la poignée, tout en permettant à la phalangine d'agir sur la gâchette pour commander un système. Autrement dit, le contact de la phalange sur la poignée, pendant l'action de la phalangine, permet de serrer la poignée entre la phalange et les autres doigts tout en laissant libre l'action de la phalangine.

Avantageusement, la gâchette comprend une extrémité de poussée, ladite extrémité de poussée en position de repos étant située au moins en partie en regard de la face interne de la phalangine dudit pouce en extension, la phalange dudit pouce étant en appui le long de la poignée. L'empoignement de la poignée reste optimal car la phalange du pouce est courte et les muscles correspondant sont puissants. Le fait d'utiliser la phalangine du pouce pour commander un système permet une commande plus sensible que les commandes utilisant l'action de l'index de la main, par exemple. En effet, le pouce est le doigt de la main à la fois le plus puissant et le plus subtil, car il est commandé par huit muscles.

Avantageusement, la gâchette est disposée de manière à être actionnée par un pouce en appui sur la poignée par un coté latéral interne de la phalange. On définit le plan de référence phalange/phalangine d'un pouce comme étant le plan moyen dans lequel la phalange et la phalangine évoluent naturellement. On entend par « face interne » et « face externe » du pouce, les faces dont les normales sont dans le plan de référence. On entend par « côtés latéraux » d'un pouce, les côtés dont les normales sont sensiblement perpendiculaire au plan de référence. Le côté latéral interne est celui qui est en regard des autres doigts de la main.

Les muscles permettant le mouvement de la phalangine sont principalement situés sur les faces interne et externe de la phalange. Le côté latéral de la phalange du pouce ne comprend pas de muscle d'actionnement de la phalangine. Ainsi les muscles de la paume de la main peuvent tirer la phalange pour que la main serre fermement la poignée sans contraindre les muscles d'actionnement de la phalangine. La phalangine peut agir sur la gâchette avec un effort faible et de longue durée, sans imposer de relâchement à l'empoignement vif de la poignée par la phalange. Les contractions musculaires de la main et du bras dues à l'empoignement sont découplées de la contraction des muscles d'actionnement de la phalangine. Ainsi, la commande de la gâchette reste sensible et non fatigante malgré les efforts d'empoignement de la poignée. Cela permet de piloter des systèmes à commande continue.

Selon un mode de réalisation, la poignée est allongée selon un axe de la poignée, le dispositif présente un plan de référence parallèle à un axe de la poignée dans lequel peut se déplacer la phalange en appui le long de la poignée et la phalangine du pouce.

Selon un mode de réalisation, la poignée est allongée selon un axe de la poignée, le dispositif comprenant des moyens de prépositionnement d'empoignement d'une main de référence, tels qu'un plan de référence phalange/phalangine présente un angle de préhension (B) par rapport à l'axe de la poignée inférieur à 50 degrés, et de préférence inférieur à 25 degrés.

Avantageusement, les moyens de prépositionnement d'empoignement sont tels qu'un plan moyen métacarpien est sensiblement parallèle à l'axe de la poignée.

Selon un mode de réalisation, les moyens de prépositionnement présentent une position principale d'empoignement, un plan de référence principal et une position principale d'extension du pouce de ladite main de référence.

Un avantage de ce dispositif réside dans le fait qu'il permet de garder la phalange du pouce en appui permanent avec la poignée tout en utilisant le mouvement naturel de la phalangine et/ou de la phalange autour de leurs articulations respectives pour effectuer la commande.

La position du plan de référence par rapport à la poignée est notamment fonction de la forme et de la dimension de la section droite de la poignée à l'endroit du serrage entre la phalange, la paume et l'index. Dans une variante, cette section droite peut être de dimension suffisamment réduite pour que la phalange serre la poignée et que le plan de référence phalange/phalangine soit parallèle au plan métacarpien défini par les métacarpes des autres doigts et parallèle à l'axe de la poignée. Dans ce cas, le métacarpe de pouce n'est pas en position de pince optimale, mais est remonté sur le côté de la main. Dans une autre variante, les moyens de prépositionnement de la main sont tels que le plan métacarpien est légèrement incliné par rapport à l'axe de la poignée, de sorte que la phalange serre la poignée pendant que le métacarpe de pouce est en position de pince naturelle et que le plan de référence phalange/phalangine est parallèle à l'axe de la poignée.

Selon un mode de réalisation, le dispositif présente plusieurs positions d'empoignement de la poignée et dans lequel la gâchette comprend une pièce de poussée s'étendant autour de la poignée de manière qu'à chaque position d'empoignement, l'extrémité de la phalangine est en regard de la pièce de poussée.

Dans le cas de motocross ou de jet-ski, le conducteur doit pouvoir empoigner fermement la machine dans plusieurs positions tant assis que debout sur la machine. En position assise, l'avant-bras de l'utilisateur est horizontal. En position debout, cet avant-bras est remonté. L'empoignement naturel de la poignée correspond à une position où les métacarpes de la main sont dans le prolongement de l'avant-bras. La poignée présente un plan de référence sensiblement horizontal correspondant à la position assise, et un plan de référence incliné correspondant à une position debout. Le fait que la pièce de poussée s'étende autour de la poignée permet que, quelle que soit la position de la phalange du pouce, entre les positions assise et/ou debout, la phalangine trouve toujours en regard de son extrémité une portion de la pièce de poussée.

Selon une variante, la poignée présente une zone d'appui sensiblement plane destinée à recevoir la phalange durant la commande.

Lorsque la poignée présente un plan de référence principal correspondant à une position d'empoignement majoritaire, la zone d'appui plane, ou sensiblement adaptée à la morphologie de la phalange permet de réduire la pression d'appui. Cela facilite le glissement éventuel de la phalange le long de cette zone d'appui au cours de l'éventuelle trajectoire d'actionnement de la gâchette.

Selon un mode de réalisation, la gâchette est mobile entre une position de repos et une position extrême d'actionnement.

On utilise la fermeture naturelle du pouce sur les autres doigts pour effectuer la commande. Lors de cette fermeture du pouce, la phalange du pouce tourne autour de son articulation naturelle et reste quelque soit la phase de commande de la gâchette, en permanence en appui avec la poignée à la différence des systèmes de commande à gâchette classiques. Cette particularité de positionnement de la phalange durant la phase de commande est essentielle car c'est elle qui permet la préhension constante par son opposition aux autres doigts tout au long de la commande. Cette fermeture du pouce génère un déplacement de la phalangine et/ou de la phalange vers l'index tout en ayant toujours la phalange du pouce en appui permanent avec la poignée.

Selon un mode de réalisation, la gâchette est mobile autour d'un axe de rotation situé de manière que l'extrémité de poussée de la gâchette décrit un arc de cercle confondu avec l'arc de cercle décrit par la phalangine lors de la commande.

Selon un mode de réalisation, la gâchette est mobile autour d'un axe de rotation incliné par rapport à la normale au plan principal de référence d'un angle (A) inférieur à 30 degrés.

Selon une variante, le dispositif comprend une butée de gâchette telle que la position extrême d'actionnement est limitée par la fermeture complète du poing et l'appui de la gâchette sur l'index.

Autrement dit, la gâchette peut être mobile afin qu'en position de repos, son extrémité se place en appui contre la phalangine du pouce en extension, et dont le déplacement, sous l'effet de la pression exercée par le pouce, permette d'effectuer une commande dont la limite sera définie par la fermeture complète du poing et l'appui de la gâchette sur l'index.

Avantageusement, le dispositif comprend un système de rappel permettant le retour automatique de la gâchette dans sa position de repos lorsqu'elle n'est plus sollicitée.

Selon un autre mode de réalisation, la gâchette est fixe par rapport à la poignée.

Avantageusement, un ou plusieurs capteurs peuvent fournir une information caractéristique de l'effort appliqué par le pouce sur la gâchette utilisé pour générer la commande.

Selon une variante, un support de gâchette peut positionner la gâchette par rapport à la poignée.

Selon un mode de réalisation, le support de gâchette est intégré à la poignée.

Avantageusement, un support de gâchette ou la gâchette possèdent un ou plusieurs systèmes de réglages permettant un positionnement ergonomique de la gâchette par rapport au pouce.

Avantageusement, la pièce de poussée de la gâchette présente une forme et/ou un revêtement antidérapant. La pièce de poussée peut permettre une bonne adhérence générant un contact fiable de la phalangine sur l'extrémité de gâchette afin d'éviter toute dérobade de celle-ci.

Selon un mode de réalisation, la poignée est munie d'un arrêt de main externe et/ou d'un arrêt de main interne.

Selon des variantes le dispositif peut comprendre au moins un générateur de la consigne de commande pris parmi une pièce de liaison mécanique, un capteur de la position de la gâchette, de type analogique ou numérique, ou un capteur de l'effort exercé sur la gâchette de type analogique ou numérique. Autrement dit, le système asservi peut être piloté de façon purement mécanique et/ou grâce a une ou des information, analogique ou numérique, de la position de la gâchette ou de l'effort appliqué sur celle-ci. La gâchette peut piloter de façon mécanique le système asservi via une pièce de liaison qui est par exemple ajustable sur la gâchette.

Selon un autre aspect, l'invention porte également sur une machine équipée d'un dispositif de commande manuel, dans lequel la poignée permet l'empoignement de la machine par un utilisateur, la poignée étant positionnée par rapport à l'utilisateur de manière que l'extrémité de poussée de la gâchette est située au moins en partie devant la poignée.

Selon un autre aspect, l'invention porte également sur une utilisation d'un dispositif manuel de commande pour empoigner une machine et simultanément commander un des systèmes d'asservissement de la machine, ledit empoignement de la machine se faisant avec un serrage de tous les doigts de la main sur la poignée pendant l'actionnement de la commande avec le pouce de la même main.

Avantageusement, le système asservi est piloté de façon mécanique, par exemple via une pièce de liaison ajustable sur la gâchette.

De manière alternative ou complémentaire, le système asservi est piloté grâce à une ou des informations, analogique ou numérique, de la position de la gâchette ou de l'effort appliqué sur celle-ci.

Selon un aspect, l'invention porte également sur un dispositif de commande à gâchette au pouce, couplé à une poignée permettant d'empoigner une machine, et de contrôler de façon sensitive et non fatigante une commande d'un des systèmes asservis de cette machine, tout en assurant un empoignement optimal grâce au contact permanent et naturel de tous les doigts sur la poignée.

Le dispositif comporte une poignée, équipée d'une gâchette dont une extrémité, positionnée devant la poignée et la face interne de la phalangine du pouce, est soumise à une pression de celle-ci afin de générer une commande permettant de piloter le système asservi, via une liaison mécanique et/ou une ou plusieurs informations numériques ou analogiques, tout en permettant un déplacement dans un plan de référence parallèle a l'axe de la poignée, de la phalangine et de la phalange du pouce qui garantit par son appui permanent le long de la poignée un empoignement optimal de celle-ci. Autrement dit, le dispositif peut présenter un plan de référence parallèle à l'axe de la poignée dans lequel peut se déplacer la phalange en appui le long de la poignée et la phalangine du pouce.

D'autres caractéristiques et avantages de l'invention apparaîtront à la lecture de la description détaillée de quelques modes de réalisation pris à titre d'exemples non limitatifs et illustrée par les dessins annexés, sur lesquels :
- la figure 1 représente en perspective un premier mode de réalisation du dispositif en position de repos ;
- la figure 2 est une vue de face du premier mode de réalisation en position de repos ;
- la figure 3 est une coupe transversale selon le plan III-III de la figure 2 ;
- la figure 4 est une vue de dessous du premier mode de réalisation en position de repos ;
- la figure 5 est une vue de dessus du premier mode de réalisation en position d'actionnement, en débattement maximum ;
- la figure 6 représente en perspective une variante du premier mode de réalisation avec un capteur de rotation ;
- la figure 7 représente en perspective une variante du premier mode de réalisation avec un capteur de position ;
- la figure 8 représente en perspective un deuxième mode de réalisation avec un axe de rotation en position de repos sensiblement parallèle au plan de référence ;
- la figure 9 est une vue de face du deuxième mode de réalisation en position de repos ;
- la figure 10 est une coupe transversale du deuxième mode de réalisation ;
- la figure 11 représente en perspective un troisième mode de réalisation avec un système de translation du dispositif en position de débattement maximum ;
- la figure 12 représente en perspective un quatrième mode de réalisation avec gâchette intégrée à la poignée du dispositif en position de débattement maximum ;
- la figure 13 représente en vue de face un cinquième mode de réalisation avec une gâchette fixe et intégrée à la poignée du dispositif ;
- la figure 14 est une vue de dessous d'un sixième mode de réalisation avec gâchette munie d'une extrémité de poussée allongée ; et
- la figure 15 est une vue arrière du sixième mode de réalisation.

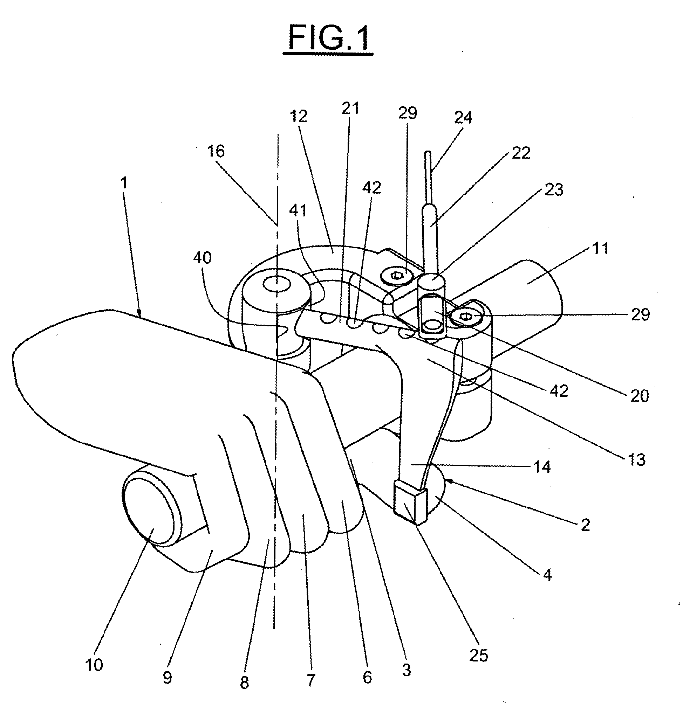

Dans toutes les figures, les référence portant le même numéros renvoient à des éléments correspondants ayant des fonctions similaires Comme illustré aux figures 1 à 5, le premier mode de réalisation du dispositif comporte une poignée 10, empoignée par une main 1 et agrippée par l'index 6, le majeur 7, l'annulaire 8 et l'auriculaire 9. Le pouce 2 est quant à lui, placé sous la poignée 10, sa phalange 3 en appui sur celle-ci, assurant ainsi son empoignement. La poignée 10 est fixée sur un support de poignée 11. Le support de poignée 11 peut être un guidon ou un volant.

Un support de gâchette 12 est fixé sur le support de poignée 11 grâce à deux vis 29. Une gâchette 13 est mobile sur le support de gâchette 12 en s'articulant autour d'un axe virtuel 16 proche de l'articulation du pouce 5. Cette gâchette 13 est munie d'attaches 21 sur une desquelles est fixée une pièce de liaison 20. Un câble 24, permettant le pilotage d'un système asservi, est fixé à cette pièce de liaison 20 et coulisse dans une gaine 22, fixée sur le support de gâchette 12 à l'aide d'un arrêt de gaine 23. L'extrémité 14 de la gâchette 13 est munie d'une pièce de poussée 25 et se place, en position de repos, devant la face interne de la phalangine 4 du pouce 2 qui maintient sa phalange 3 en appuie sur la poignée 10.

Pour effectuer une commande, on referme le pouce 2 sur l'index 6 tout en maintenant la phalange 3 en appui sur la poignée 10 ainsi que la phalangine 4 en appui sur la pièce de poussée 25. Le déplacement de la phalange 3 et de la phalangine 4 s'effectue dans un plan de référence 18. La pression de la phalangine 4 sur la pièce de poussée 25 entraîne une rotation de la gâchette 13 autour d'un axe virtuel 16. Un débattement 19 de la gâchette 13, est limité par une butée de repos 40 et une butée de débattement extrême 41. Il entraîne un déplacement de la pièce de liaison 20 qui provoque un coulissement du câble 24 dans la gaine 22 permettant de piloter un système asservi.

La gâchette 13 est fixée au support de gâchette 12 qui peut également se fixer sur la poignée 10. Le support de gâchette 12 peut être aussi intégré à la poignée 10.

Le support de gâchette permet de fixer la gâchette 13 par rapport à la poignée 10. Il peut aussi permettre un positionnement latéral et en rotation par rapport à la poignée 10 afin d'adapter la position de l'extrémité 14 de gâchette. La gâchette est articulée sur le support 12 grâce à un axe physique ou un axe virtuel 16. L'axe virtuel 16 peut être réalisé grâce à la rotation relative d'une forme circulaire de la gâchette 13 par rapport à une autre forme circulaire du support de gâchette 12.

Il est possible d'effectuer un réglage ergonomique de l'extrémité 14 de la gâchette pour l'adapter à chaque utilisateur. On peut utiliser pour cela les vis 29 qui donnent un degré de liberté au support de gâchette. Le dispositif peut également comprendre des systèmes de réglages supplémentaires. Ces systèmes peuvent être intégrés à la poignée 10, au support de poignée 12 ou à la gâchette 13. Il est aussi possible de prévoir une gâchette 13 interchangeable afin de s'adapter à l'utilisateur.

La gâchette 13 peut être mobile par rapport à la poignée 10 de plusieurs façons, soit en étant articulée autour d'un axe 16, soit en translatant dans une direction, soit en combinant ces deux mouvements.

Dans le cas du pilotage d'un système asservi de façon purement mécanique, on peut fixer sur la gâchette 13 une pièce de liaison 20 qui permet de transmettre le déplacement de la gâchette 13 au système asservi. Cette pièce de liaison 20, à titre d'exemple, peut être reliée à un câble, une barre ou à une tige qui pilotera le système asservi. On peut aussi utiliser un système hydraulique ou pneumatique pour piloter le système asservi. La gâchette est reliée, via la pièce de liaison 20, à un piston ou à un autre dispositif permettant de transformer l'effort exercé sur la gâchette 13 en une pression et de piloter le système asservi. Un ensemble d'attaches 42 peut permettre un réglage de la pièce de liaison 20 le long de la gâchette 13 afin de créer une démultiplication, de l'effort et/ou du déplacement, entre la gâchette et le système asservi.

Le pouce chez l'Homme, est le doigt de la main qui permet la préhension. Il est le doigt qui rend la main préhensile par son opposition par rapport aux quatre autres doigts. Cela transforme la main en pince, en support ou en griffe mobile. Le pouce permet une préhension correcte d'une poignée dont la fonction est de permettre une saisie optimale un objet. La simple préhension n'est pas toujours suffisante, il faut aussi y ajouter une notion d'effort car une poignée peut servir à maintenir fermement un appareil ou à se maintenir sur un véhicule. On parle alors plutôt d'empoignement que de simple préhension. En effet une simple préhension ne nécessite ni la présence de tous les doigts sur la poignée, ni des contractions musculaires conséquentes. La présence du pouce en contact sur la poignée permet un empoignement ferme.

L'utilisation du pouce 2 pour effectuer la commande permet non seulement une excellente commande sensitive et très réactive, mais aussi comme il est le doigt le plus robuste, il permet souvent de produire un travail suffisant pour commander mécaniquement un système asservi. Néanmoins le travail que le pouce 2 peut fournir est limité et dépend de la morphologie de l'utilisateur. Dans le cas où le travail fourni par le pouce 2 pour piloter le système asservi, n'est pas suffisant ou fatiguant dans le temps, on peut utiliser un système temps réel qui fournit une partie, ou la totalité du travail, afin de piloter correctement le système asservi. Dans le cas d'un système temps réel fournissant une partie du travail, il est nécessaire de garder la liaison mécanique 20 entre le dispositif à gâchette et le système asservi. Dans le cas ou le système temps réel fourni la totalité du travail, il n'est plus nécessaire de garder cette liaison mécanique 20 entre la gâchette 13 et le système asservi. Néanmoins cette liaison peut être conservée afin, soit de permettre une solution de secours en cas de défaillance du système temps réel, soit de permettre la perception de la réaction du système asservi piloté.

La pièce de poussée 25 permet un bon contact entre l'extrémité de la gâchette 13 et le pouce 2. La pièce de poussée 25 présente une forme ou un revêtement conférant une bonne adhérence entre le pouce 2 et l'extrémité de gâchette 13 quelles que soient les conditions d'utilisation. La gâchette 13 et/ou son extrémité peuvent aussi être recouverts d'une matière antidérapante. Ceci est particulièrement utile sous la pluie, dans la boue, dans l'eau pour les jet-skis ou dans le cas d'une sudation de la main. La gâchette peut avoir une forme ergonomique, qui peut être éventuellement relativement complexe, afin de s'adapter au mieux à son utilisateur.

Pour des raisons de sécurité on peut aussi avoir une gâchette 13 déformable sous l'effet d'un choc afin de ne pas blesser les doigts de l'utilisateur lors d'un éventuel choc avec un élément extérieur.

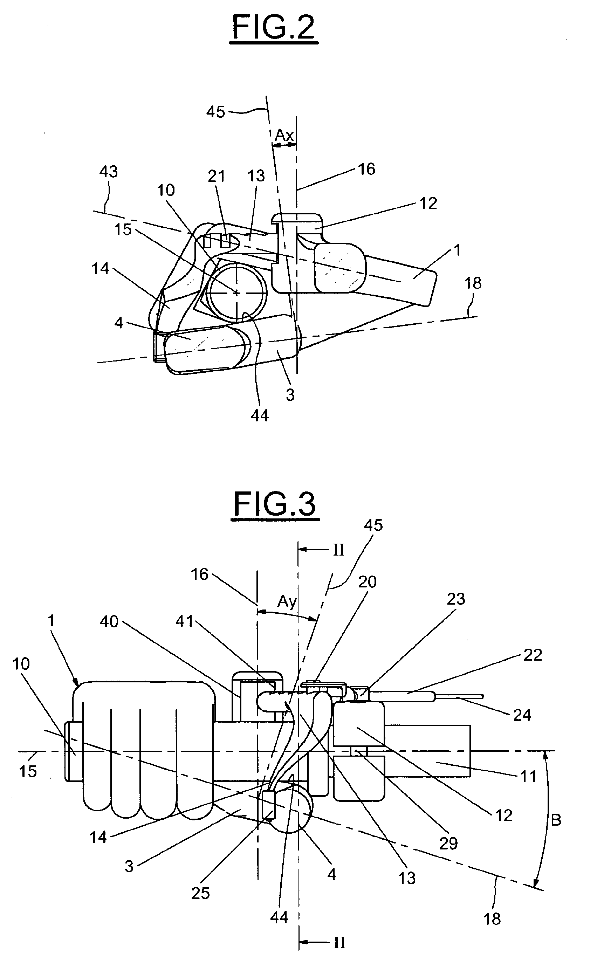

Comme illustré en figures 2 et 3, la main présente une paume en appui sur la poignée. Un plan métacarpien 43 est défini par les métacarpes de la main 1. il est ici légèrement incliné vers le haut. Le plan de référence phalange/phalangine 18 est légèrement incliné vers le bas. L'effet de pince entre la phalange 3 et les quatre doigts 6, 7, 8, 9 a lieu dans le prolongement naturel de l'avant bras. Dans le cas où la poignée est utilisée dans un jet-ski, cette position naturelle principale peut correspondre à une position assise du pilote.

La poignée 10 peut comprendre des formes épousant la paume et les doigts dans cette position principale, pour faciliter le repositionnement de la main dans une même position d'empoignement principale. Le plan phalange/phalangine 18 correspond à un plan de référence principal de la poignée 10.

L'axe 16 de rotation de la gâchette 13 présente un angle A par rapport à une normale 45 au plan de référence principal 18. Cet angle A est inférieur à 50°, et de préférence inférieur à 25°. Il apparaît en projection Ax et Ay dans les figures 2 et 3. Le pouce 2 est en appui sur la poignée 10 par son côté latéral 44. Le fait que l'angle A soit relativement faible, fait que le côté latéral 44 subissant la pression d'empoignement est très peu orienté vers la face interne de la phalange 3. Ainsi, les muscles de la phalangine 4 sont peu meurtris. Le plan de référence phalange/phalangine 18 peut être parallèle à l'axe 15 de la poignée 10. Toutefois, un angle B entre l'axe 15 et le plan de référence 18 permet d'augmenter la force disponible pour l'empoignement.

Lors de la fermeture du pouce 2, la phalange 3 glisse le long d'une surface d'appui 46 de la poignée 10. La surface d'appui 46 est sensiblement parallèle à l'axe 15 de la poignée 10. En raison de l'angle B, la fermeture du pouce 2 s'accompagne d'un léger écartement de l'articulation phalange/métacarpe du pouce 2. Cela contribue à augmenter le serrage d'empoignement pendant l'actionnement de la gâchette 13. Le plan de référence 18 se déplace légèrement durant la fermeture du pouce 2, de sorte que la position de la face interne de la phalangine 4 est une trajectoire composée assez proche d'un plan parallèle à l'axe 15 de la poignée 10.

L'axe de rotation 16 de la gâchette 13 peut passer par l'articulation naturelle du pouce. Le positionnement de l'axe 16 permet à l'extrémité 14 de la gâchette 13 d'être en permanence en contact avec la face interne de la phalangine 4 lors de la phase de commande. L'axe 16 peut être positionné au plus près de l'axe naturel de rotation du pouce afin que l'extrémité de la gâchette 13 décrive un arc de cercle confondu avec l'arc de cercle décrit par la phalangine 4 lors de la commande. L'extrémité 14 de la gâchette 13, la phalangine 4 et la phalange 3 du pouce 2 évoluent dans le même plan 18. L'orientation de l'axe de rotation 16 de la gâchette 13 permet au point de contact de la gâchette 13 avec la phalangine 4, et le pouce 2 d'évoluer dans le plan de référence 18. Cela permet à l'extrémité 14 de la gâchette 13 de suivre le mouvement naturel de la phalangine 4 du pouce. Cela réduit le glissement de la phalangine 4 sur la gâchette 13, en superposant le déplacement de l'extrémité de la gâchette 13 avec celui de la phalangine 4. L'effort du pouce 2 sur la gâchette 13 s'applique en un point fixe sur l'extrémité de celle-ci.

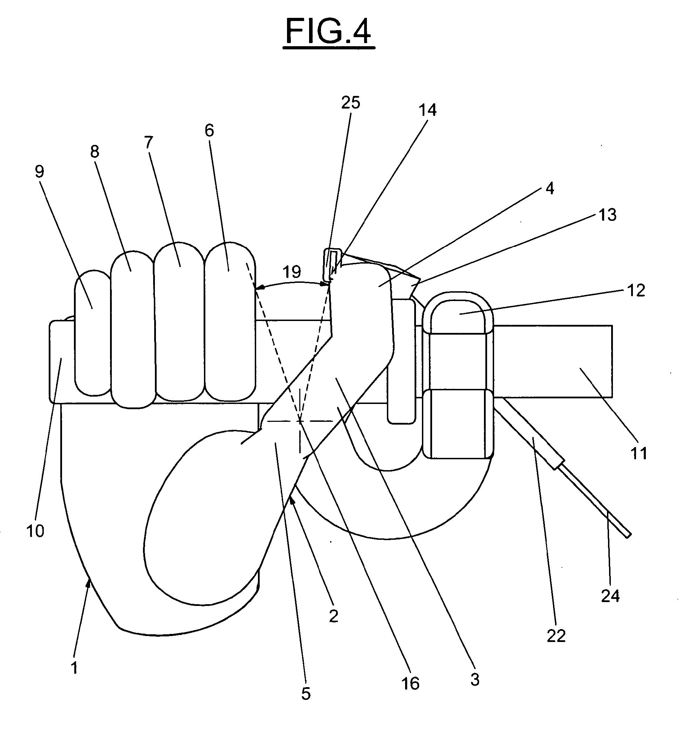

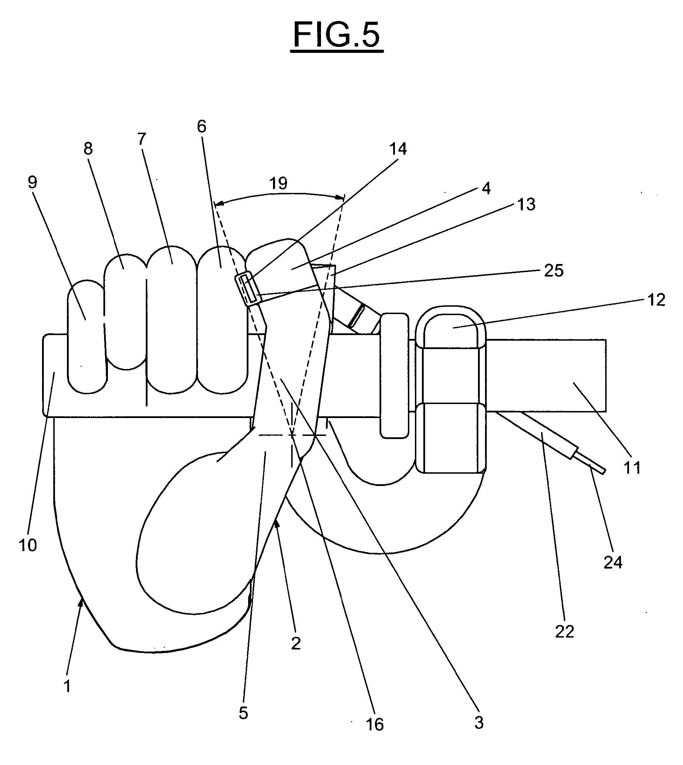

Comme illustré aux figures 4 et 5, le déplacement physiologique de la phalange 3 et la phalangine 4 est physiquement limité par la fermeture complète du poing et l'arrêt de la phalangine 4 contre l'index. On a alors la gâchette coincée entre la face supérieure de l'index 6 et la face intérieure du pouce. La butée de gâchette 41 permet de positionner la position d'actionnement extrême, de manière à ne pas atteindre le contact entre la gâchette 13 et l'index 6 (figure 5).

L'inclinaison A de l'axe de rotation 16 permet d'adapter le mouvement de la gâchette 13 aux préférences de l'utilisateur. Une fois la position de l'axe de rotation 16 de la gâchette 13 fixée, la commande est générée en refermant le pouce sur les autres doigts tout en maintenant la phalange 3 du pouce 2 en appui avec la poignée 10. En se refermant, le pouce déplace la phalange 3 qui glisse sous la poignée 10. La phalangine 4 pousse l'extrémité 25 de la gâchette 13. C'est ce déplacement de la gâchette 13 qui est utilisé comme commande du système asservi.

On peut également ajouter à la poignée 10 un arrêt entre la gâchette 13 et l'index 6 afin d'éviter que la gâchette 13 ne vienne écraser l'index 6 lors de la fermeture complète du pouce. On peut aussi protéger l'index 6 en intégrant un arrêt sur l'axe de rotation de la gâchette 13.

Le dispositif comporte non seulement l'avantage de permettre un bon empoignement de la poignée tout en permettant de contrôler de façon sensitive et non fatigante une commande ; mais aussi celui de permettre, lors de l'intensification de la commande, l'optimisation et l'accroissement de l'empoignement. En effet, plus on actionne la commande, plus le pouce peut se refermer jusqu'à une limite définie par la fermeture complète du poing qui correspond à l'empoignement idéal de la poignée. Cette caractéristique du dispositif est très avantageuse car elle le différencie de la plupart des dispositifs connus de commande à la poignée qui génèrent une diminution de l'empoignement lors de l'intensification de la commande. A titre d'exemple, si le dispositif est utilisé comme accélérateur sur une moto, plus on accélère, donc plus on va vite et plus on optimise l'empoignement de la poignée. A titre d'autre exemple, si le dispositif est utilisé comme frein sur une moto ou un vtt, plus on freine, donc plus on décélère, plus l'effort dans les bras lié à la décélération augmente et plus on optimise l'empoignement de la poignée. Cette caractéristique permet une amélioration conséquente de la sécurité et de la performance à l'inverse des dispositifs connus.

Le dispositif comporte aussi un avantage en terme de sécurité car il ne bloque ou ne coince aucun doigts durant la préhension et la commande. En situation d'urgence on peut donc facilement et rapidement relâcher la poignée sans craindre qu'un doigt ne reste coincé par la commande.

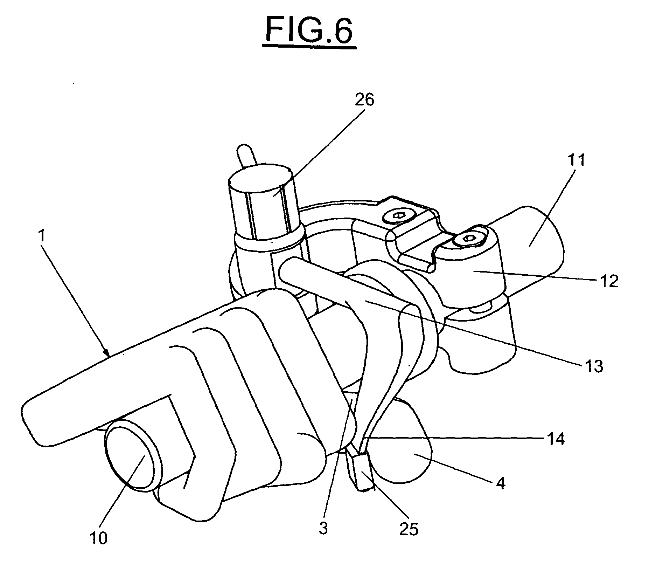

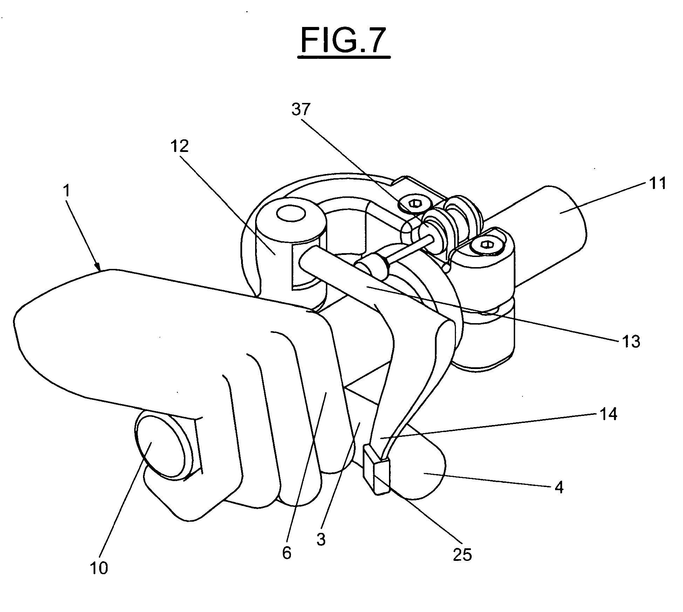

Dans les variantes illustrées en figure 6 et 7, un capteur de position 26 rotatif est placé sur l'axe virtuel de rotation 16. il est fixé sur le support de gâchette 12 et fournit une information sur la position de la gâchette 13 à un système temps réel afin de piloter un système asservi.

Le capteur de position 26 peut être de plusieurs types et de technologies diverses. Il peut s'agir à titre d'exemple et de façon non exhaustive d'un capteur de rotation 26 (figure 6) de la gâchette 13 ou d'un capteur de déplacement linéaire 37 (figure 7). Ces capteurs peuvent être des capteurs usuels de position, des capteurs avec ou sans contact.

On peut utiliser soit un ou plusieurs capteurs qui peuvent être des capteurs de position de l'extrémité 14 de la gâchette 13 ou des capteurs d'effort sur cette extrémité 14. Ce ou ces capteurs fournissent une ou des informations au système temps réel qui les utilise pour générer la consigne. Cette consigne peut se limiter à la position de la gâchette mais peut aussi être une combinaison complexe de plusieurs informations provenant de divers capteurs ou systèmes non obligatoirement montés sur la gâchette.

A titre d'exemple, pour piloter un volet des gaz d'un moteur thermique, on peut utiliser la position de la gâchette, ou de son extrémité, pour générer la consigne. Mais cette consigne peut ne pas se limiter à cette seule position. Elle peut être une combinaison de cette position, d'une autre consigne de régime de ralenti, d'un correctif de température etc...

Ensuite le système temps réel effectue, grâce a cette consigne, l'asservissement en position d'un actuateur électrique sur lequel est fixé le volet de gaz ou une vanne hydraulique, un système de frein, un système d'embrayage ou un moteur électrique. Cette commande peut aussi être utilisée de façon non linéaire comme pour effectuer un changement de rapports par exemple.

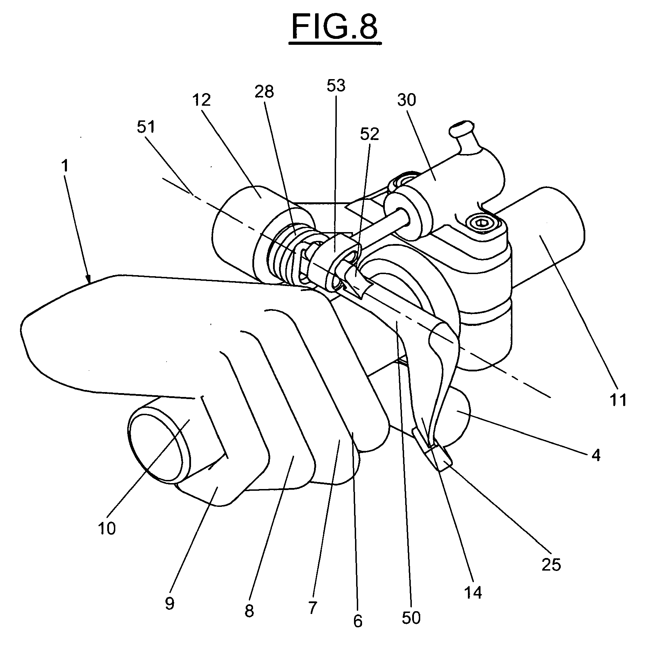

On va maintenant décrire à l'aide des figures 8 à 10 le deuxième mode de réalisation. Une gâchette 50 est fixée sur le support de gâchette 12 et est mobile en rotation autour d'un axe 51.

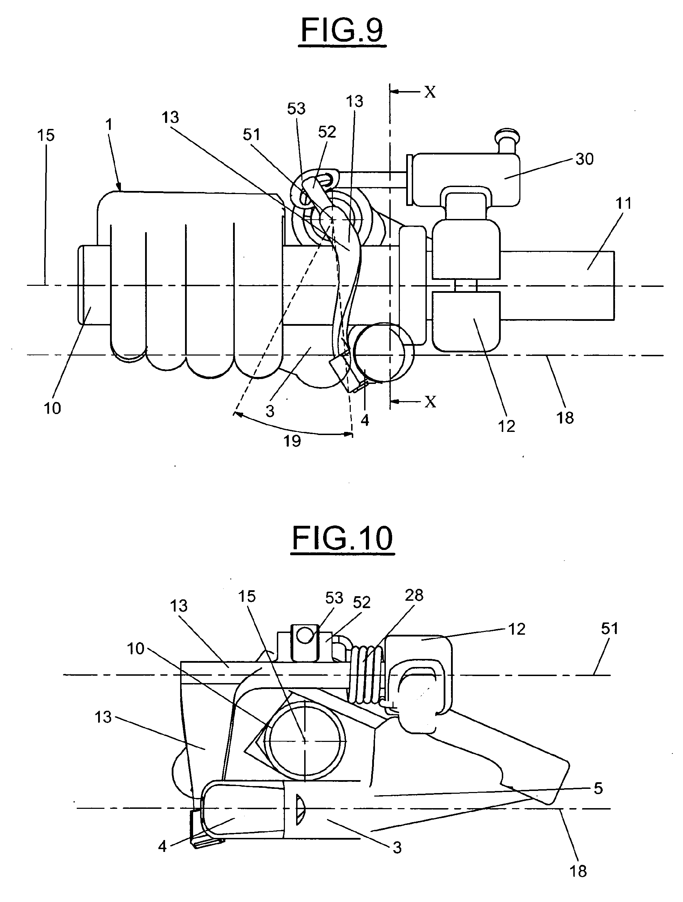

Comme illustré aux figures 9 et 10, l'axe de rotation 51 n'est plus proche de la normale 45 au plan de référence 18 comme dans le premier mode de réalisation, mais sensiblement parallèle à celui-ci. Un système de rappel 28 permet le retour de la gâchette 13 en position de repos.

Le moyen de rappel 28 comprend un ressort en appui sur une excroissance 52 en un point distant de l'axe de rotation 51. Une pièce de liaison 53 relie l'excroissance 52 à un piston 30 qui générera, lors d'un débattement 19, une pression afin de piloter le système asservi. Le plan de référence phalange/phalangine 18 est ici sensiblement parallèle à l'axe 15 de la poignée.

On peut aussi utiliser un autre type de système de rappel, comme par exemple un système hydraulique ou pneumatique qui n'utilise pas obligatoirement de ressort pour permettre ce retour de la gâchette en position de repos. Dans le cas d'un système asservi intégrant un système de rappel et comportant une liaison mécanique entre la gâchette et le système asservi, on peut éventuellement s'affranchir de ce système de rappel sur la gâchette et utiliser uniquement celui du système asservi. Dans le cas ou la gâchette est mobile et pilote le système asservi via un système temps réel sans liaison mécanique avec le système asservi, le dispositif intègre un système de rappel. Cela permet de gérer l'effort par le pouce. Le système crée un effort de réaction à celui du pouce qui permet de mieux doser la commande.

Un capteur de position 30 linéaire est placé entre la gâchette 13 et le support de gâchette 12 sur lequel il est fixé et fournit une information sur la position de la gâchette 13 à un système temps réel afin de piloter un système asservi.

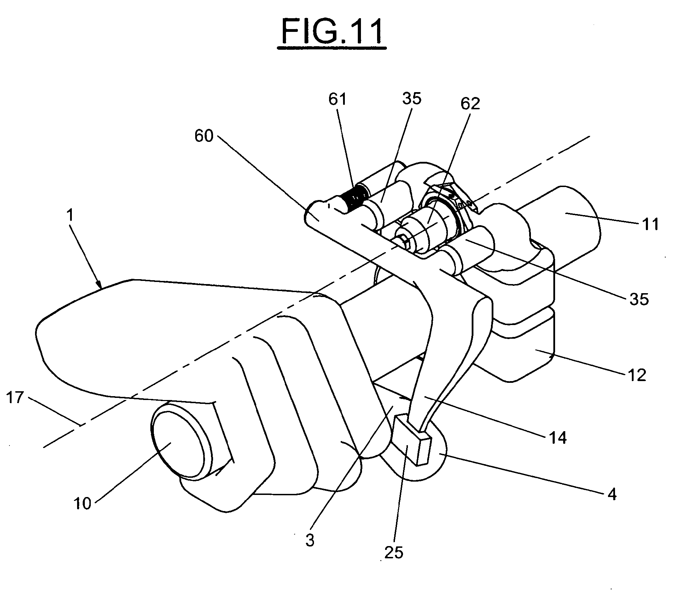

Dans le troisième mode de réalisation, illustré en figure 11, une gâchette 60 se déplace en translation par rapport au support de gâchette 12 grâce à deux guides 35. L'extrémité 14 de la gâchette se déplace parallèlement à l'axe 15 de la poignée 10.

En raison du glissement du côté latéral 44 de la phalange 3 le long d'une surface d'appui 46 de la poignée 10, la face interne de l'extrémité de la phalangine suit le déplacement de l'extrémité 14 de la gâchette 13 avec un glissement relatif réduit. Un ressort de rappel 61 est fixé entre la gâchette 60 et le support de gâchette 12.

Un capteur de position linéaire 62 sans contact est fixé sur le support de gâchette 12 et renseigne un système temps réel sur la position de la gâchette 13 afin que celui-ci pilote le système asservi.

Dans une variante, le déplacement de la gâchette peut très bien être une combinaison d'une rotation autour d'un axe et d'une translation, décrites précédemment, afin de s'adapter au mieux aux préférences de l'utilisateur.

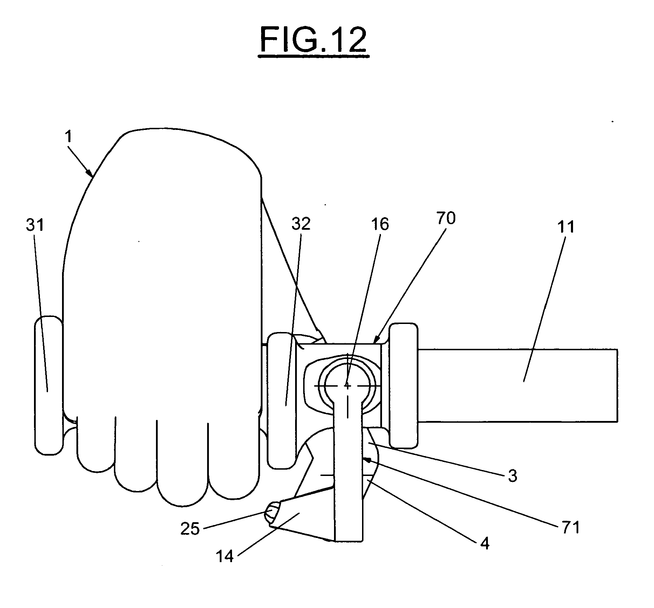

Le quatrième mode de réalisation illustré en figure 12, diffère du premier mode de réalisation en ce qu'il comprend une poignée 70 plus élaborée. La poignée 70 intègre le support de gâchette 12. Une gâchette 71 est articulée autour de l'axe 16. La poignée 70 est également dotée d'un arrêt de main externe 31 ainsi que d'un arrêt de main interne 32 afin de permettre le positionnement longitudinal de la main.

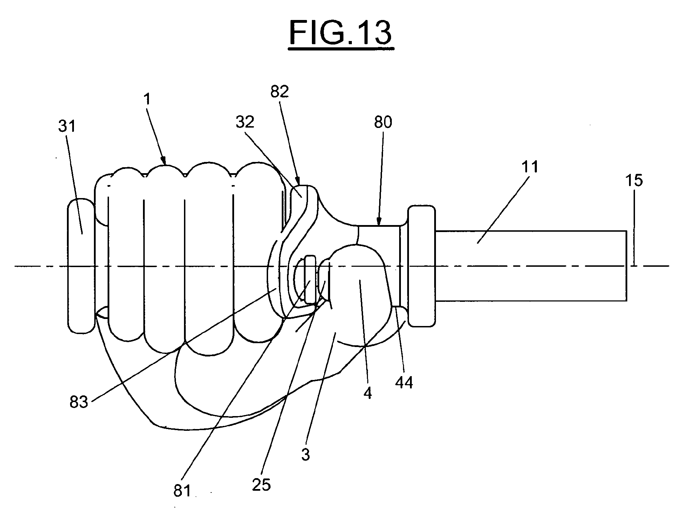

Dans le cinquième mode de réalisation illustré en figure 13, la gâchette 13 est fixe par rapport à une poignée 80. Un capteur d'effort 81, muni d'une pièce de poussée 25, est placé sur l'extrémité de gâchette 14. Des systèmes de réglage 36 sont intégrés au support de gâchette 12 afin de permettre le positionnement ergonomique de l'extrémité de gâchette 14, et donc de la pièce de poussée 25, par rapport à la phalangine 4. La phalangine 4 effectue une pression sur la pièce de poussée 25 qui génère un effort sur le capteur d'effort 27, tout en maintenant la phalange 3 en appuie sur la poignée 10. On a toujours la phalange 3 et la phalangine 4 qui évoluent dans le plan de référence 18. Le capteur d'effort 27 transmettra l'information d'effort à un système temps réel afin que celui-ci pilote le système asservi.

La poignée 80 comprend également des moyens de prépositionnement 82. Lesdits moyens de prépositionnement 82 comprennent un arrêts de main interne 31 et/ou un arrêt de main externe 32. La forme des arrêts de main 31, 32 est conçue pour permettre le positionnement angulaire de la main autour de l'axe 15 de la poignée 80. L'utilisateur peut facilement retrouver la position de main optimale lors de chaque utilisation. Les moyens de prépositionnement 82 définissent une position principale d'empoignement.

La position angulaire de la main 1 permet entre autre le bon positionnement de la phalangine sur l'extrémité de la gâchette dans sa position de repos.

La position latérale de la main 1 permet entre autre aussi le bon positionnement de la phalangine sur l'extrémité de la gâchette dans sa position de repos.

Dans le cas ou la gâchette ne pilote plus de façon mécanique le système asservi, il est possible de s'affranchir d'avoir une gâchette mobile, tout en conservant le principe fondamental de fonctionnement du dispositif, à savoir un appui constant de la phalange sur la poignée et de la phalangine sur l'extrémité de gâchette. En effet si la gâchette est fixe, on peut alors utiliser l'effort et/ou une ou plusieurs informations sur cet effort exercé sur l'extrémité de la gâchette par le pouce pour générer la commande. Cet effort et/ou une ou plusieurs informations sur cet effort, sont transmises à un capteur qui fournit cette ou ces informations au système temps réel qui les utilisent pour générer la consigne et donc piloter le système asservi.

Cette ou ces informations peuvent être fournis par un ou plusieurs capteurs qui peuvent être de différents types.

Dans une variante, on peut combiner le quatrième et le cinquième mode de réalisation. Une gâchette, similaire à la gâchette 71 est montée fixe sur la poignée 70, et équipée d'une jauge de contrainte mesurant la déformation de la gâchette.

Dans une autre variante, on peut modifier la forme de la gâchette 80 afin que l'on ait toujours la possibilité de l'actionner même si l'angle de la main sur la poignée est différent de l'angle de position optimale. On peut aussi aider le positionnement angulaire de la main en utilisant une poignée de forme ergonomique. Par exemple on peut intégrer sur la poignée une forme permettant un positionnement angulaire de la paume, qui positionnera de fait la main également. Autrement dit, dans cette variante, les moyens de prépositionnement 82 de la main 1 présentent plusieurs positions d'empoignement.

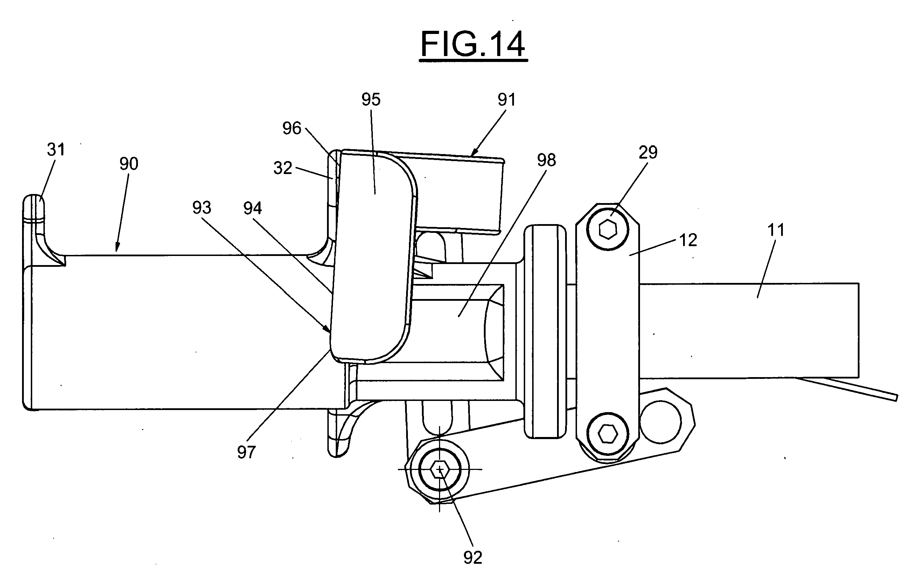

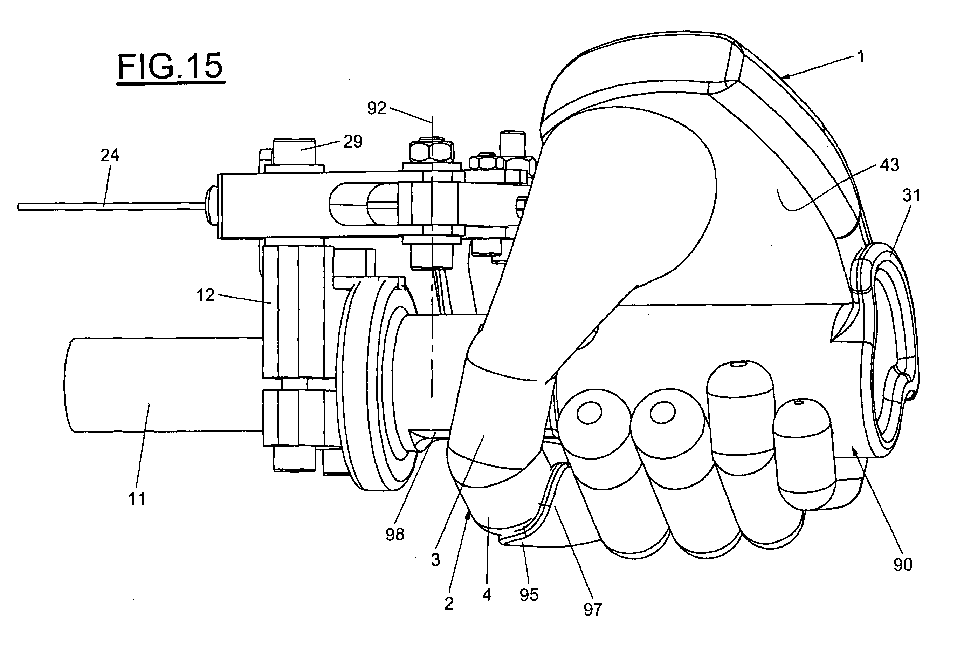

Le sixième mode de réalisation illustré aux figures 14 et 15, comprend une poignée 90 et une gâchette 91 articulée autour d'un axe de rotation 92 orienté de manière similaire à l'axe 16 du premier mode de réalisation. La gâchette 91 comprend une pièce de poussée 93 de forme allongée et s'étendant autour de l'axe 15 de la poignée 90. La pièce de poussée 93 présente un flan latéral 94 s'étendant radialement par rapport à l'axe 15, et un flan de guidage 95 permettant de maintenir l'extrémité de la phalangine en appui sur le flan latéral 94.

La pièce de poussée 93 présente une extrémité avant 96 destinée à être poussée par la phalangine 4 lorsque la main 1 est dans une position principale d'empoignement. La pièce de poussée 93 présente également une extrémité arrière 97 permettant à la phalangine 4 d'appuyer sur la gâchette 90 lorsque la main 1 est dans une position d'empoignement extrême illustrée en figure 15. Cette position d'empoignement peut correspondre par exemple à une position debout d'un pilote de jet-ski. Dans cette position d'empoignement extrême, la phalange 3 du pouce 2 reste en contact avec la poignée 90.

La poignée 90 présente également un méplat d'appui principal 98 destiné à recevoir la phalange 3 du pouce 2 lorsque la main 1 est dans la position d'empoignement principal.

Selon une variante non illustrée, la gâchette peut être composée de plusieurs pièces.

Selon une variante non illustrée, la gâchette peut être placée sous la poignée et venir en contact avec le la phalangine du pouce par-dessous.

Selon une variante non illustrée, on peut intégrer plusieurs dispositifs de commande sur la même poignée. On peut par exemple avoir sur la même poignée une gâchette commandant les gaz et une commandant les freins.

Selon une variante non illustrée, un système de cannelures peut permettre le positionnement de la poignée sur le support de poignée.

Selon une variante non illustrée, la poignée peut avoir une section de forme quelconque et non constante le long de son axe.

Selon une variante non illustrée, une protection de main peut être intégrée à la poignée.

Le dispositif selon l'invention est plus particulièrement destiné aux machines équipées de commandes couplées à des poignées nécessitant un empoignement important, tels que les véhicules équipés de poignées (motos, bateaux, quads, motosneige, jet-skis ou VTT...) ou des outillages portatifs (débroussailleuse, perceuse, marteau-piqueur ...)

## Revendications

1. Dispositif manuel de commande comprenant une poignée (10, 70, 80, 90) destinée à être empoignée par une main (1) avec un pouce (2), et une gâchette (13, 50, 60, 71, 83, 91) destinée à être soumise à une pression de la phalangine (4) du pouce, **caractérisé par le fait que** la gâchette (13, 50, 60, 71, 83, 91) est disposée par rapport à la poignée (10, 70, 80, 90) de manière à pouvoir être soumise à une pression de la phalangine (4) pendant que la phalange (3) dudit pouce (2) est en appui le long de la poignée (10, 70, 80, 90).

2. Dispositif selon la revendication 1, dans lequel la gâchette (13, 50, 60, 71, 83, 91) est disposée de manière à être actionnée par un pouce (2) en appui sur la poignée (10, 70, 80, 90) par un coté latéral interne (44) de la phalange (3).

3. Dispositif selon la revendication 1 ou 2, dans lequel la gâchette (13, 50, 60, 71, 83, 91) comprend une extrémité de poussée (14, 93), ladite extrémité de poussée (14, 93) en position de repos étant située au moins en partie en regard de la face interne de la phalangine (4) dudit pouce en extension, la phalange (3) dudit pouce (2)étant en appui le long de la poignée (10, 70, 80, 90)

4. Dispositif selon l'une quelconque des revendications précédentes, dans lequel la poignée (10, 70, 80, 90) est allongée selon un axe (15) de la poignée (10, 70, 80, 90), le dispositif comprenant des moyens de prépositionnement d'empoignement (82) d'une main de référence, tels qu'un plan de référence phalange/phalangine (18) présente un angle de préhension (B) par rapport à l'axe (15) de la poignée (10, 70, 80, 90) inférieur à 50 degrés, et de préférence inférieur à 25 degrés.

5. Dispositif selon la revendication 4 dans lequel les moyens de prépositionnement d'empoignement (82) sont tels qu'un plan moyen métacarpien (43) est sensiblement parallèle à l'axe (15) de la poignée (80, 90).

6. Dispositif selon la revendication 4 ou 5 dans lequel les moyens de prépositionnement (82) présentent une position principale d'empoignement, un plan de référence principal (18) et/ou une position principale d'extension du pouce (2) de ladite main de référence.

7. Dispositif selon l'une quelconque des revendications précédentes, dans lequel la gâchette (91) comprend une pièce de poussée (93) s'étendant autour de la poignée (91) de manière que dans plusieurs positions d'empoignement, l'extrémité de la phalangine (4) est en regard de ladite pièce de poussée (93).

8. Dispositif selon l'une quelconque des revendications précédentes, dans lequel la poignée (90) présente une zone d'appui (98) sensiblement plane destinée à recevoir la phalange (3) durant la commande.

9. Dispositif selon l'une quelconque des revendications précédentes, dans lequel la gâchette (13, 50, 60, 71, 91) est mobile entre une position de repos et une position extrême d'actionnement,

10. Dispositif selon la revendication 3 et 9 prises dans leur ensemble, dans lequel la gâchette (13, 71, 91) est mobile autour d'un axe de rotation (16, 51, 92) situé de manière que l'extrémité de poussée (14, 93) de la gâchette (13) décrit un arc de cercle confondu avec l'arc de cercle décrit par la phalangine (4) lors de la commande.

11. Dispositif selon la revendication 6 et 9 prises dans leur ensemble, dans lequel la gâchette (13, 71, 91) est mobile autour d'un axe de rotation (16, 92) incliné par rapport à la normale (45) au plan principal de référence (18) d'un angle (A) inférieur à 30 degrés.

12. Dispositif selon l'une quelconque des revendications 9 à 11, comprenant une butée de gâchette (41) telle que la position extrême d'actionnement est limité par la fermeture complète du poing et l'appui de la gâchette sur l'index (6).

13. Dispositif selon l'une quelconque des revendications précédentes, comprenant au moins un générateur de la consigne de commande pris parmi une pièce de liaison mécanique (20, 53), un capteur (26, 37, 62) de la position de la gâchette, de type analogique ou numérique, ou un capteur (27, 81) de l'effort exercé sur la gâchette (13, 50, 83) de type analogique ou numérique.

14. Machine équipée d'un dispositif selon l'une quelconque des revendications précédentes, dans lequel la poignée (10, 70, 80, 90) permet l'empoignement de la machine par un utilisateur, la poignée étant positionnée par rapport à l'utilisateur de manière que l'extrémité de poussée (14) de la gâchette (13, 50, 60, 71, 83, 91) est située au moins en partie devant la poignée (10, 70, 80, 90).

15. Utilisation d'un dispositif manuel de commande selon l'une quelconque des revendications 1 à 13 pour empoigner une machine et simultanément commander un des systèmes d'asservissement de la machine, ledit empoignement de la machine se faisant avec un serrage de tous les doigts de la main (1) sur la poignée (10, 70, 80, 90) pendant l'actionnement de la commande avec le pouce (2) de la même main.

## Claims

1. Manual control device comprising a handle (10, 70, 80, 90) designed to be grasped by a hand (1) with a thumb (2), and a trigger (13, 50, 60, 71, 83, 91) designed to be subjected to a pressure from the middle joint (4) of the thumb, **characterized in that** the trigger (13, 50, 60, 71, 83, 91) is placed relative to the handle (10, 70, 80, 90) so as to be able to be subjected to a pressure from the middle joint (4) while the phalanx (3) of the said thumb (2) is resting along the handle (10, 70, 80, 90).

2. Device according to Claim 1, wherein the trigger (13, 50, 60, 71, 83, 91) is placed so as to be actuated by a thumb (2) resting on the handle (10, 70, 80, 90) via an internal lateral side (40) of the phalanx (3).

3. Device according to Claim 1 or 2, wherein the trigger (13, 50, 60, 71, 83, 91) comprises a pressure end (14, 93), the said pressure end (14, 93) in the rest position being situated at least partly opposite the internal face of the middle joint (4) of the said thumb in extension, the phalanx (3) of the said thumb (2) resting along the handle (10, 70, 80, 90).

4. Device according to any one of the preceding claims, wherein the handle (10, 70, 80, 90) is elongate along an axis (15) of the handle (10, 70, 80, 90), the device comprising reference hand grasping prepositioning means (82), such that a phalanx/middle-joint reference plane (18) has a gripping angle (B) relative to the axis (15) of the handle (10, 70, 80, 90) that is less than 50 degrees and preferably less than 25 degrees.

5. Device according to Claim 4, wherein the grasping prepositioning means (82) are such that a metacarpal midplane (43) is substantially parallel to the axis (15) of the handle (80, 90).

6. Device according to Claim 4 or 5, wherein the prepositioning means (82) have a main grasping position, a main reference plane (18) and/or a main position of extension of the thumb (2) of the said reference hand.

7. Device according to any one of the preceding claims, wherein the trigger (91) comprises a thrust part (93) extending around the handle (91) so that, in several grasping positions, the end of the middle joint (4) is opposite the said pressure part (93).

8. Device according to any one of the preceding claims, wherein the handle (90) has a substantially flat bearing zone (98) designed to receive the phalanx (3) during the control action.

9. Device according to any one of the preceding claims, wherein the trigger (13, 50, 60, 71, 91) can be moved between a rest position and an extreme actuation position.

10. Device according to Claims 3 and 9 taken together, wherein the trigger (13, 71, 91) can be moved about an axis of rotation (16, 51, 92) situated so that the pressure end (14, 93) of the trigger (13) describes an arc of a circle indistinguishable from the arc of a circle described by the middle joint (4) during the control action.

11. Device according to Claims 6 and 9 taken together, wherein the trigger (13, 71, 91) can be moved about an axis of rotation (16, 92) inclined relative to the normal (45) to the main reference plane (18) through an angle (A) of less than 30 degrees.

12. Device according to any one of Claims 9 to 11, comprising a trigger stop (41) such that the extreme actuation position is limited by the complete closure of the fist and the resting of the trigger on the index finger (6).

13. Device according to any one of the preceding claims, comprising at least one control setpoint generator taken from a mechanical connecting part (20, 53), an analogue or digital sensor (26, 37, 62) of the position of the trigger, or analogue or digital type of a sensor (27, 81) of the force exerted on the trigger (13, 50, 83) of analogue or digital type.

14. Machine fitted with a device according to any one of the preceding claims, wherein the handle (10, 70, 80, 90) allows the grasping of the machine by a user, the handle being positioned relative to the user so that the pressure end (14) of the trigger (13, 50, 60, 71, 83, 91) is situated at least partly in front of the handle (10, 70, 80, 90).

15. Use of a manual control device according to any one of Claims 1 to 13 for grasping a machine and simultaneously controlling one of the systems for controlling the machine, the said grasping of the machine being done with a gripping of all the fingers of the hand (1) on the handle (10, 70, 80, 90) during the actuation of the control device with the thumb (2) of the same hand.

## Patentansprüche

1. Manuelle Steuervorrichtung, die einen Griff (10, 70, 80, 90), der dazu bestimmt ist, von einer Hand (1) mit einem Daumen (2) ergriffen zu werden, und einen Auslöser (13, 50, 60, 71, 83, 91) aufweist, der dazu bestimmt ist, einem Druck des Endglieds (4) des Daumens ausgesetzt zu werden, **dadurch gekennzeichnet, dass** der Auslöser (13, 50, 60, 70, 83, 91) bezüglich des Griffs (10, 70, 80, 90) so angeordnet ist, dass er einem Druck des Endglieds (4) ausgesetzt werden kann, während das Grundglied (3) des Daumens (2) entlang des Griffs (10, 70, 80, 90) aufliegt.

2. Vorrichtung nach Anspruch 1, bei der der Auslöser (13, 50, 60, 71, 83, 91) so angeordnet ist, dass er von einem auf dem Griff (10, 70, 80, 90) aufliegenden Daumen (2) durch eine seitliche Innenseite (44) des Grundglieds (3) betätigt wird.

3. Vorrichtung nach Anspruch 1 oder 2, bei der der Auslöser (13, 50, 60, 71, 83, 91) ein Schubende (14, 93) aufweist, wobei das Schubende (14, 93) sich in der Ruhestellung zumindest zum Teil gegenüber der Innenseite des Endglieds (4) des gestreckten Daumens befindet, wobei das Grundglied (3) des Daumens (2) entlang des Griffs (10, 70, 80, 90) aufliegt.

4. Vorrichtung nach einem der vorhergehenden Ansprüche, bei der der Griff (10, 70, 80, 90) gemäß einer Achse (15) des Griffs (10, 70, 80, 90) längs verläuft, wobei die Vorrichtung Einrichtungen (82) zur Vorpositionierung des Ergreifens durch eine Bezugshand aufweist, derart, dass eine Grundglied/Endglied-Bezugsebene (18) einen Greifwinkel (B) bezüglich der Achse (15) des Griffs (10, 70, 80, 90) von weniger als 50 Grad und vorzugsweise weniger als 25 Grad hat.

5. Vorrichtung nach Anspruch 4, bei der die Vorpositionierungseinrichtungen des Ergreifens (82) so sind, dass eine Mittelhand-Mittelebene (43) im Wesentlichen parallel zur Achse (15) des Griffs (80, 90) ist.

6. Vorrichtung nach Anspruch 4 oder 5, bei der die Vorpositionierungseinrichtungen (82) eine Hauptergreifstellung, eine Hauptbezugsebene (18) und/oder eine Hauptstreckungsstellung des Daumens (2) der Bezugshand aufweisen.

7. Vorrichtung nach einem der vorhergehenden Ansprüche, bei der der Auslöser (91) ein Schubteil (93) enthält, das sich so um den Griff (91) erstreckt, dass in mehreren Ergreifstellungen das Ende des Endglieds (4) sich vor dem Schubteil (93) befindet.

8. Vorrichtung nach einem der vorhergehenden Ansprüche, bei der der Griff (90) eine im Wesentlichen ebene Auflagezone (98) hat, die dazu bestimmt ist, während der Steuerung das Grundglied (3) aufzunehmen.

9. Vorrichtung nach einem der vorhergehenden Ansprüche, bei der der Auslöser (13, 50, 60, 71, 91) zwischen einer Ruhestellung und einer Betätigungs-Endstellung beweglich ist.

10. Vorrichtung nach Anspruch 3 und 9 zusammengenommen, bei der der Auslöser (13, 71, 91) um eine Drehachse (16, 51, 92) beweglich ist, die so angeordnet ist, dass das Schubende (14, 93) des Auslösers (13) einen Kreisbogen beschreibt, der mit dem Kreisbogen zusammenfällt, den das Endglied (4) bei der Steuerung beschreibt.

11. Vorrichtung nach Anspruch 6 und 9 zusammengenommen, bei der der Auslöser (13, 71, 91) um eine Drehachse (16, 92) beweglich ist, die bezüglich der Senkrechten (45) zur Hauptbezugsebene (18) um einen Winkel (A) von weniger als 30 Grad geneigt ist.

12. Vorrichtung nach einem der Ansprüche 9 bis 11, die einen Auslöseranschlag (41) aufweist, derart, dass die Betätigungs-Endstellung durch das vollständige Schließen der Faust und das Anlegen des Auslösers auf den Zeigefinger (6) begrenzt wird.

13. Vorrichtung nach einem der vorhergehenden Ansprüche, die mindestens einen Steuersollwert-Generator enthält, der ausgewählt wird aus einem mechanischen Verbindungsteil (20, 53), einem analogen oder digitalen Sensor (26, 37, 62) der Stellung des Auslösers, oder einem analogen oder digitalen Sensor (27, 81) der auf den Auslöser (13, 50, 83) ausgeübten Kraft.

14. Maschine, die mit einer Vorrichtung nach einem der vorhergehenden Ansprüche ausgestattet ist, bei der der Griff (10, 70, 80, 90) das Ergreifen der Maschine durch einen Benutzer erlaubt, wobei der Griff bezüglich des Benutzers so positioniert ist, dass das Schubende (14) des Auslösers (13, 50, 60, 71, 83, 91) sich zumindest zum Teil vor dem Griff (10, 70, 80, 90) befindet.

15. Verwendung einer manuellen Steuervorrichtung nach einem der Ansprüche 1 bis 13, um eine Maschine zu ergreifen und gleichzeitig eines der Regelsysteme der Maschine zu steuern, wobei das Ergreifen der Maschine durch ein Festklammern aller Finger der Hand (1) auf dem Griff (10, 70, 80, 90) während der Betätigung der Steuerung mit dem Daumen (2) der gleichen Hand erfolgt.
